# FASCICULE DE BREVET EUROPEEN

(11) **EP 4 590 497 B1**
(45) Date de publication et mention de la délivrance du brevet: **26.08.2026**
(21) Numéro de dépôt: 23793422.9
(22) Date de dépôt: 14.09.2023
(51) Int. Cl.: B29C 70/44, B29C 70/24, B29C 70/54, B28B 1/26, C04B 35/80, C04B 35/83, B28B 3/00, B28B 7/34, B28B 7/46

(54) **MEMBRANE DRAINANTE POUR LA FABRICATION DE MATERIAUX COMPOSITES**
DRAINAGEMEMBRAN ZUR HERSTELLUNG VON VERBUNDWERKSTOFFEN
DRAINAGE MEMBRANE FOR THE MANUFACTURE OF COMPOSITE MATERIALS

(30) Priorité: 19.09.2022 FR 2209406
(43) Date de publication de la demande: 30.07.2025
(73) Titulaire: SAFRAN, 75015 Paris (FR)
(72) Inventeur: RAVEY, Christophe, 77550 Moissy-Cramayel (FR); VENAT, Romain, 77550 Moissy-Cramayel (FR); PICON, Romain, 77550 Moissy-Cramayel (FR)
(74) Mandataire: Cabinet Beau de Loménie
(86) Numéro de dépôt international: PCT/FR2023/051400
(87) Numéro de publication internationale: WO 2024/062178

(56) Documents cités:
- US-A- 5 087 193

## Description

### Domaine Technique

La présente invention concerne la fabrication de pièces en matériau composite, notamment à matrice céramique (CMC) ou organique (CMO).

### Technique antérieure

Les pièces en matériau composite à matrice céramique ou organique sont généralement fabriquées par imprégnation d'une préforme fibreuse. La préforme fibreuse peut être disposée dans un moule, fermé par un contre-moule. La préforme fibreuse est ensuite imprégnée avec une barbotine chargée de particules d'un précurseur de matrice ou avec une résine, selon le type de matrice souhaité. L'imprégnation est réalisée en injectant la barbotine ou la résine dans la cavité de moulage qui contient la préforme fibreuse, de sorte à faire pénétrer progressivement la barbotine ou la résine dans la préforme fibreuse.

Les solutions d'imprégnation utilisant un moule et un contre-moule délimitant une cavité de moulage sont toutefois peu satisfaisantes pour la fabrication de certaines pièces, en particulier pour la fabrication de pièces de grande taille ou de faible épaisseur comme par exemple les carters de moteur d'avion ou les pièces d'arrière-corps aéronautiques. En outre, ces solutions sont très contraignantes du point de vue du tolérancement des outillages, qui doivent respecter des dimensions très précises.

Pour remédier à ces inconvénients, il est possible d'utiliser une membrane déformable à la place du contre-moule. Une telle solution est par exemple décrite dans les documents US2017334791A1 et US2021046671A1, qui décrivent des procédés dans lesquels une membrane sépare une chambre d'imprégnation d'une chambre de compaction. La préforme est disposée dans la chambre d'imprégnation. Dans ces procédés, un fluide d'imprégnation destiné à pénétrer dans les porosités de la préforme est injecté dans la chambre d'imprégnation, et un fluide de compression est injecté dans la chambre de compaction afin d'appliquer une pression sur la membrane, la membrane appliquant ainsi une pression sur la préforme fibreuse. Les paramètres d'injection des fluides d'imprégnation et de compression peuvent varier selon le type de pièce à réaliser.

Le document US5087193A décrit également un procédé dans lequel une membrane sépare une chambre d'imprégnation d'une chambre de compaction.

Lorsque la préforme fibreuse est convenablement imprégnée, et après une éventuelle étape de traitement du fluide d'imprégnation présent dans la préforme, le fluide de compression présent dans la chambre de compaction est aspiré. Toutefois, on constate que du liquide de compression résiduel reste dans la chambre de compaction, et ce même lorsque l'on répète plusieurs fois successivement l'opération de vidange. Ainsi, un nettoyage manuel régulier de l'outillage est nécessaire pour retirer le fluide de compression à la surface de la membrane et évacuer le reste de fluide encore présent dans la chambre de compaction. Cette opération manuelle de nettoyage est d'autant plus problématique que le fluide de compression utilisé peut présenter un risque pour la sécurité, pour la santé des personnes ou pour l'environnement, et peut engendrer des problèmes de pollution dans l'atelier.

### Exposé de l'invention

La présente invention a donc pour but de remédier aux inconvénients précités, en proposant une solution de fabrication d'une pièce en matériau composite limitant la manipulation manuelle du fluide de compression. En particulier, il a été constaté que, lors de l'aspiration du fluide de compression pour la vidange, la membrane pouvait venir se coller à la paroi de la chambre de compaction sous l'effet de l'aspiration, empêchant ainsi l'évacuation d'une partie du fluide de compression. Ce mécanisme explique la quantité assez importante de liquide de compression résiduel dans la chambre de compaction, même après plusieurs cycles de vidange successifs.

Ainsi, l'invention propose un procédé de fabrication d'une pièce en matériau composite comprenant les étapes suivantes :
- la disposition d'une préforme fibreuse dans un moule comprenant une chambre d'imprégnation en faisant reposer une première face de la préforme sur une surface de support de la chambre d'imprégnation, la chambre d'imprégnation étant fermée par une membrane souple placée en regard d'une deuxième face de la préforme, ladite membrane séparant la chambre d'imprégnation d'une chambre de compaction,
- l'injection d'un fluide d'imprégnation dans la chambre d'imprégnation,
- l'injection d'un fluide de compression dans la chambre de compaction de manière à appliquer une pression sur la membrane,
- l'aspiration du fluide de compression présent dans la chambre de compaction par un ou plusieurs orifices de sortie de la chambre de compaction,
le procédé étant caractérisé en ce que la surface de la membrane présente du côté de la chambre de compaction comprend une pluralité de gorges.

Il a été constaté que la présence de telles gorges sur la surface de la membrane permet de réduire notablement la quantité de fluide de compression résiduel présent dans la chambre de compaction après la vidange, c'est-à-dire après l'aspiration du fluide de compression.

Cette amélioration s'explique par la présence de gorges à la surface de la membrane du côté de la chambre de compaction qui permet, lors de l'étape d'aspiration, la circulation du fluide de compression entre la membrane et la ou les parois de la chambre de compaction lorsque ladite membrane est plaquée contre une ou plusieurs parois de la chambre de compaction.

On peut prévoir en particulier qu'une partie des gorges débouche sur un ou plusieurs orifices de sortie lorsque la membrane est plaquée contre au moins une paroi de la chambre de compaction. L'évacuation du fluide de compression est ainsi fortement facilitée lors de l'étape d'aspiration, et ce même si la membrane vient se plaquer contre la ou les parois de la chambre de compaction. En outre, cette solution permet de conserver un outillage de taille réduite, la chambre de compaction n'ayant pas besoin d'être agrandie pour éviter le contact avec la membrane. En conservant une chambre de compaction aux dimensions réduites, on facilite la mise en œuvre du procédé sans avoir besoin d'augmenter la quantité de fluide de compression nécessaire au bon fonctionnement de l'outillage.

Le fluide d'imprégnation comprend un ou plusieurs précurseurs de matrice.

Selon un mode particulier de réalisation de l'invention, les gorges sont disposées de sorte que, lorsque la membrane est en contact avec une paroi de la chambre de compaction, typiquement lors de l'étape d'aspiration, au moins une partie des gorges débouche sur au moins un orifice de sortie de la chambre de compaction ou sur un espace de la chambre de compaction comprenant au moins un orifice de sortie.

Ainsi, la circulation du fluide de compression jusqu'à l'orifice de sortie est facilitée lorsque la membrane est aspirée contre une paroi de la chambre de compaction. Comme la quasi-totalité du fluide de compression est aspirée, on limite la perte de fluide de compression lors de la mise en œuvre du procédé, ce qui permet de réduire la quantité de fluide de compression nécessaire.

Selon un autre mode particulier de réalisation de l'invention, les gorges sont interconnectées. Ainsi, on améliore la circulation du fluide de compression dans les gorges, par exemple pour amener le fluide de compression plus rapidement vers un orifice de sortie.

Selon un autre mode particulier de réalisation de l'invention, les gorges forment un réseau bidimensionnel de gorges. Selon un autre mode particulier de réalisation de l'invention, les gorges forment un quadrillage. Ainsi, on obtient une circulation possible du fluide de compression dans toutes les directions, avec une membrane très facile à fabriquer.

Selon un autre mode particulier de réalisation de l'invention, la membrane est renforcée par des fibres de verre ou de polyester.

Selon un autre mode particulier de réalisation de l'invention, le fluide de compression comprend au moins une huile. L'invention est particulièrement intéressante dans le cas où le fluide de compression comprend une huile, ou une substance dangereuse pour la santé ou l'environnement, car on cherche alors à limiter au maximum les interactions avec le fluide de compression ou le risque de fuite non maitrisée du fluide de compression vers l'extérieur de l'outillage.

Selon un autre mode particulier de réalisation de l'invention, le fluide d'imprégnation est une résine, le procédé comprenant en outre une étape de polymérisation de la résine imprégnant la préforme fibreuse après les étapes d'injection des fluides d'imprégnation et de compression et avant l'étape d'aspiration du fluide de compression.

Selon un autre mode particulier de réalisation de l'invention, la préforme fibreuse est réalisée par tissage tridimensionnel de fibres. Ainsi, la préforme fibreuse étant destinée à former le renfort fibreux d'une pièce en matériau composite, la pièce en matériau composite obtenue aura de très bonnes propriétés mécaniques et un risque faible de délaminage.

L'invention concerne également un système de fabrication d'une pièce en matériau composite comprenant :
- un moule qui comprend une chambre d'imprégnation comportant une surface de support destinée à être en contact d'une première face d'une préforme, la chambre d'imprégnation étant fermée par une membrane souple située en regard de la surface de support, ladite membrane séparant la chambre d'imprégnation d'une chambre de compaction,
- un dispositif d'injection d'un fluide d'imprégnation comprenant des particules de précurseur de matrice dans la chambre d'imprégnation,
- un dispositif d'injection d'un fluide de compression dans la chambre de compaction de manière à appliquer une pression sur la membrane,
- un dispositif d'aspiration du fluide de compression présent dans la chambre de compaction par un ou plusieurs orifices de sortie,
le système étant caractérisé en ce que la face de la membrane présente du côté de la chambre de compaction comprend une pluralité de gorges.

Selon un mode particulier de réalisation de l'invention, les gorges sont disposées de sorte que, lorsque la membrane est en contact avec une paroi de la chambre de compaction lors du fonctionnement du dispositif d'aspiration, au moins une partie des gorges débouche sur au moins un orifice de sortie ou sur un espace de la chambre de compaction comprenant au moins un orifice de sortie.

### Brève description des dessins

[Fig. 1] La figure 1 est une vue schématique en coupe d'un outillage selon l'invention dans lequel est positionnée une préforme fibreuse.
[Fig. 2] La figure 2 est une vue schématique en perspective de la membrane de l'outillage de la figure 1.
[Fig. 3] La figure 3 est une vue schématique partielle en coupe de la membrane de la figure 2 illustrant trois gorges en coupe.
[Fig. 4] La figure 4 est une vue schématique en coupe de l'outillage de la figure 1 lors de l'injection du fluide d'imprégnation.
[Fig. 5] La figure 5 est une vue schématique en coupe de l'outillage de la figure 1 lors de l'injection du fluide de compression.
[Fig. 6] La figure 6 est une vue schématique en coupe de l'outillage de la figure 1 lors de l'aspiration du fluide de compression.

### Description des modes de réalisation

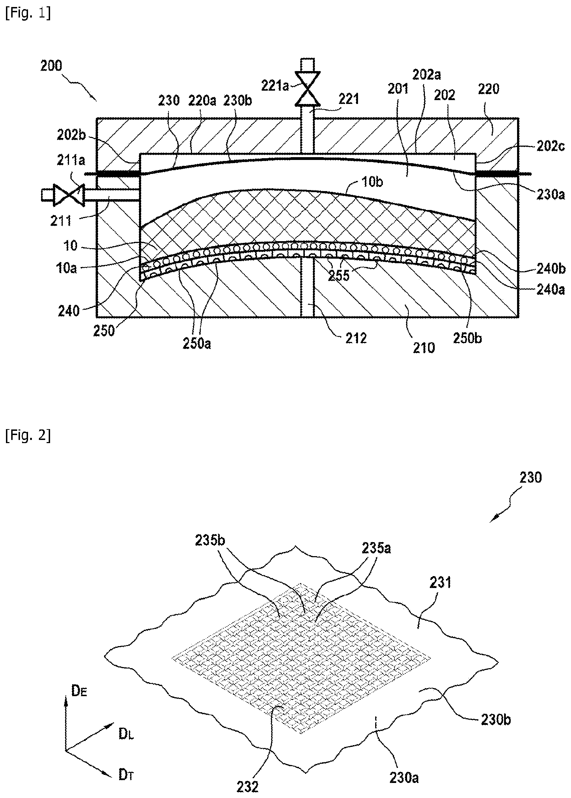

Un exemple de système ou d'outillage de fabrication d'une pièce en matériau composite selon l'invention est illustré sur les figures 1 à 6. Le système de fabrication 200 comprend un moule, qui comporte d'une part une chambre d'imprégnation 201 dans laquelle est disposée une préforme fibreuse 10 et d'autre part une chambre de compaction 202.

Un fluide d'imprégnation 5 est destiné à être injecté dans la chambre d'imprégnation 201 et un fluide de compression 6 est destiné à être injecté dans la chambre de compaction 202. Ainsi, la chambre d'imprégnation 201 comporte un ou plusieurs orifices d'entrée 211 permettant l'introduction du fluide d'imprégnation 5 dans ladite chambre d'imprégnation 201. Le ou les orifices d'entrée 211 de la chambre d'imprégnation 201 peuvent être équipés d'une vanne 211a. La chambre d'imprégnation 201 peut également comporter un ou plusieurs orifices de sortie 212 permettant l'évacuation d'une partie du fluide d'imprégnation 5. De même, la chambre de compaction 202 comporte un ou plusieurs orifices d'entrée 221 permettant l'introduction du fluide de compression 6 dans ladite chambre de compaction 202, et un ou plusieurs orifices de sortie 221 permettant l'aspiration et l'évacuation du fluide de compression 6 présent dans ladite chambre de compaction 202. Les orifices d'entrée et de sorties 221 de la chambre de compaction 202 peuvent être confondus, ou au moins en partie confondus, comme dans l'exemple illustré sur les figures 1 à 6. Le ou les orifices d'entrée 221 de la chambre de compaction 202 peuvent être équipés d'une vanne 221a.

La préforme fibreuse 10 est destinée à former le renfort fibreux de la pièce en matériau composite à fabriquer. La préforme fibreuse 10 est considérée ici comme la structure fibreuse de la pièce en matériau composite à fabriquer, obtenue par toute technique ou combinaison de technique de constitution de textile, de disposition et de déformation pour la disposer dans l'outillage 200.

La préforme 10 peut ainsi être réalisée au moins en partie par empilements de strates ou plis obtenus par tissage bidimensionnel (2D). La préforme 10 peut également être réalisée directement en une seule pièce par tissage tridimensionnel (3D), ou comprendre au moins une partie réalisée par tissage tridimensionnel. Par « tissage bidimensionnel », on entend ici un mode de tissage classique par lequel chaque fil de trame passe d'un côté à l'autre de fils d'une seule couche de chaîne ou inversement. Par « tissage tridimensionnel », on entend ici un tissage par lequel des fils de chaine traversent plusieurs couches de fils de trame, ou des fils de trame traversent plusieurs couches de fils de chaine. Un même fil de trame est ainsi entrelacé avec plusieurs couches différentes de fils de chaîne.

La préforme 10 peut également être réalisée au moins en partie par des nappes de fibres unidirectionnelles (UD), qui peuvent être obtenues par dépose de rubans ou par placement automatique des fibres (AFP pour « Automated Fibre Placement »), ou par enroulement filamentaire.

La préforme 10 peut être réalisée à partir de fibres céramiques ou de fibres de carbone, ou à partir d'un mélange des deux. En particulier, la préforme 10 peut être réalisée à partir de fibres constituées des matériaux suivants : l'alumine, la mullite, la silice, un aluminosilicate, un borosilicate, du carbure de silicium, du carbone, ou un mélange de plusieurs de ces matériaux. La préforme 10 peut comprendre tout type de fibres de verre, mélangées ou non avec d'autres types de fibres.

La préforme fibreuse 10 peut être réalisée par combinaison de différentes méthodes de tissage, ou par combinaison de différents matériaux. Par exemple, des nappes de fibres unidirectionnelles peuvent être insérées entre des plis réalisés par tissage tridimensionnel.

La préforme fibreuse 10 comprend une première face 10a et une deuxième face 10b, opposée à la première face 10a.

Comme dans l'exemple illustré sur les figures 1 à 6, la chambre d'imprégnation 201 peut comporter une strate de filtration 240 interposée entre la préforme fibreuse 10 et le ou les orifices de sortie 212 de la chambre d'imprégnation 201. Par exemple, lorsque le fluide d'imprégnation 5 est une barbotine composée d'une phase liquide et de particules de précurseur de matrice, la strate de filtration 240 permet de retenir les particules de précurseur de matrice dans la préforme 10 tout en laissant passer la phase liquide de la barbotine. Plus généralement, la strate de filtration 240 permet de retenir dans la préforme fibreuse 10 le ou les précurseurs de matrice et laisse passer le reste du fluide d'imprégnation 5, par exemple pour que le reste du fluide d'imprégnation soit évacué par l'orifice de sortie 212 de la chambre d'imprégnation 201.

La strate de filtration 240 comprend une première face 240a et une deuxième face 240b, opposée à la première face 240a. De préférence, la première face 10a de la préforme 10 repose sur la deuxième face 240b de la strate de filtration 240.

La strate de filtration 240 peut par exemple être réalisée en polytétrafluoroéthylène (PTFE) microporeux mais également en plâtre ou en papier. Pour réaliser la strate de filtration 240, on peut par exemple utiliser un matériau présentant une taille de pores comprise entre 1 µm et 5 µm. La strate de filtration 240 peut avoir une perméabilité résultante comprise entre 10⁻¹⁴ m² et 10⁻¹⁵ m².

Comme dans l'exemple illustré sur les figures 1 à 6, lorsque l'outillage comprend une strate de filtration 240, la chambre d'imprégnation 201 peut également comporter un élément rigide ajouré 250 interposé entre la strate de filtration 240 et le ou les orifices de sortie 212 de la chambre d'imprégnation 201. Plus précisément, une première face 250a de l'élément rigide ajouré 250 est au contact de la paroi de la chambre d'imprégnation 201 opposée à la chambre de compaction 202, ou l'élément rigide ajouré est confondu avec la paroi de la chambre d'imprégnation 201 opposée à la chambre de compaction 202. Une deuxième face 250b de l'élément rigide ajouré 250, opposée à la première face 250a, peut être au contact de la première face 240a de la strate de filtration 240, c'est-à-dire que la première face 240a de la strate de filtration 240 repose sur la deuxième face 250b de l'élément rigide ajouré. Un tel élément rigide ajouré 250 est notamment décrit dans le document US 20190134848 A1. Cet élément rigide ajouré 250 a pour fonction de faciliter l'évacuation de la phase liquide ayant traversé la strate de filtration 240 par le ou les orifices de sortie 212, quel que soit son point de sortie au niveau de la première face 240a de la strate de filtration 240.

Pour faciliter encore l'évacuation d'une partie du fluide d'imprégnation 5, l'élément rigide ajouré peut comporter des découpes ou des cavités 255 entre ses jours.

Un élément de distribution (non représenté) peut éventuellement être disposé entre la strate de filtration 240 et l'élément rigide ajouré 250, ledit élément de distribution présentant une perméabilité supérieure à celle de la strate de filtration 240. Un tel élément de distribution permet d'obtenir une vitesse d'écoulement de la phase liquide plus uniforme à l'intérieur de la strate de filtration 240. Une première face de l'élément de distribution repose alors contre la deuxième face de l'élément de l'élément rigide ajouré 250b, et une deuxième face de l'élément de distribution, opposée à la première face dudit élément de distribution, repose alors contre la première face 240a de la strate de filtration 240.

La première face 10a de la préforme 10 est en contact avec une surface de support de la chambre d'imprégnation 201, et repose sur ladite surface de support de la chambre d'imprégnation 201. Dans l'exemple illustré sur les figures 1 à 6, la surface de support de la chambre d'imprégnation correspond à la deuxième face 240b de la strate de filtration 240. On ne sort bien entendu pas du cadre de l'invention si la surface de support de la chambre d'imprégnation est une paroi rigide de ladite chambre d'imprégnation opposée à la chambre de compaction, ou une face d'un élément rigide ajouré tel que décrit précédemment. De préférence, lorsque le fluide d'imprégnation 5 est une barbotine comprenant une phase liquide et des particules de précurseur de matrice, la première face 10a de la préforme 10 repose sur un filtre ou une strate de filtration 240. De préférence, lorsque le fluide d'imprégnation est une résine, la première face 10a de la préforme 10 repose sur une paroi de la chambre d'imprégnation opposée à la chambre de compaction, ou sur une face d'un élément rigide ajouré tel que décrit précédemment.

La chambre d'imprégnation 201 et la chambre de compaction 202 du moule sont séparées par une membrane souple 230, c'est-à-dire une membrane flexible 230. La membrane souple 230 est placée en regard de la deuxième face 10b de la préforme 10. Dans la chambre d'imprégnation 201, la membrane souple 230 est de préférence opposée à la surface de support de ladite chambre d'imprégnation 201. La membrane 230 comprend une première surface 230a et une deuxième surface 230b opposée à la première surface 230a. La première surface 230a de la membrane 230 est placée en regard de la préforme 10. La première surface 230a de la membrane 230 est présente du côté de la chambre d'imprégnation 201, et la deuxième surface 230b de la membrane 230 est présente du côté de la chambre de compaction 202.

La membrane 230 peut permettre d'appliquer une pression sur le fluide d'imprégnation 5 présent dans la chambre d'imprégnation 201 afin de faire pénétrer ledit fluide d'imprégnation 5 dans la préforme fibreuse 10. La membrane 230 peut également permettre d'appliquer une pression de compactage sur la préforme fibreuse 10 disposée dans la chambre d'imprégnation 201, afin de réduire le foisonnement de ladite préforme. La pression appliquée par la membrane 230 est produite par le fluide de compression 6 qui, en appliquant une pression sur la membrane 230, déforme la membrane 230 contre la préforme fibreuse 10. La pression appliquée par le fluide de compression 6 sur la membrane 230 peut également permettre de maintenir en place ladite membrane 230 contre la préforme fibreuse 10 si la pression augmente dans la chambre d'imprégnation 201. Ainsi, la première surface 230a de la membrane 230 peut être destinée à être au contact de la préforme fibreuse 10 lorsque la chambre de compaction 202 est remplie par le fluide de compression 6. Ainsi, de préférence, la première surface 230a de la membrane 230 est lisse. La première surface 230a de la membrane 230 peut ne pas présenter de gorges.

De préférence, comme illustré sur les figures 1 à 6, la membrane sépare une première partie 210 du moule 200 et une deuxième partie 220 du moule 200, la deuxième partie 220 du moule 200 pouvant correspondre à un couvercle. Ainsi, la première partie 210 du moule comprend le ou les orifices d'entrée 211 de la chambre d'imprégnation 201, et comprend le ou les éventuels orifices de sortie 212 de la chambre d'imprégnation 201. La deuxième partie 220 du moule 200 comprend le ou les orifices d'entrée 221 de la chambre de compaction 202, et comprend le ou les orifices de sortie 222 de la chambre de compaction 202. Ainsi, la première partie 210 du moule 200 et la membrane 230 délimitent la chambre d'imprégnation 201. En particulier, les parois internes de la première partie 210 du moule 200 et la première face 230a de la membrane 230 délimitent la chambre d'imprégnation 201. De même, la deuxième partie 220 du moule 200 et la membrane 230 délimitent la chambre de compaction 202. En particulier, les parois internes de la deuxième partie 220 du moule 200 et la deuxième face 230b de la membrane 230 délimitent la chambre de compaction 202. Ainsi, la chambre de compaction 202 est délimitée par une paroi supérieure 202a opposée à la membrane 230, et par deux parois latérales 202b, 202d opposées reliant la paroi supérieure 202a à la membrane 230.

La membrane 230 s'étend en longueur selon une direction longitudinale D_{L} et en largeur selon une direction transversale D_{T}, comme illustré sur la figure 2 La membrane 230 s'étend en épaisseur selon une direction d'épaisseur D_{E}, perpendiculaire aux directions longitudinale D_{L} et transversale D_{T}.

La membrane 230 est par exemple en silicone, ou par exemple dans un matériau de type élastomère, par exemple en caoutchouc. La membrane 230 peut être renforcée par des fibres de verre ou de polyester. La membrane 230 doit être réalisée dans un matériau résistant aux températures auxquelles ladite membrane 230 peut être soumise lors du procédé complet, ainsi qu'aux fluides avec lesquels la membrane 230 va être en contact. La membrane 230 doit présenter une compressibilité cohérente avec la tolérance dimensionnelle recherchée pour la pièce. Par exemple, la membrane 230 peut présenter une épaisseur moyenne comprise entre 2 mm et 15 mm suivant la direction d'épaisseur D_{E}, et de préférence comprise entre 3 mm et 7 mm suivant la direction d'épaisseur D_{E}. En cas de préforme fibreuse de géométrie complexe, par exemple de préforme fibreuse présentant des formes concaves, l'épaisseur de la membrane peut être augmentée localement, afin de limiter la quantité de fluide de compression à injecter. Par exemple, l'épaisseur de la membrane peut aller jusqu'à 30 mm pour s'adapter à des points particuliers de la préforme fibreuse.

Conformément à l'invention, la membrane 230 comprend une pluralité de gorges 235a, 235b sur sa deuxième surface 230b. Ces gorges 235a, 235b sont des canaux, des rainures ou des sillons présents sur la deuxième surface 230b de la membrane 230. Les gorges 235a, 235b ne débouchent pas sur la première surface 230a de la membrane 230, et par conséquent les gorges 235a, 235b ne débouchent pas dans la chambre d'imprégnation 201. Les gorges 235a, 235b ont une largeur et une profondeur suffisantes pour permettre la circulation du ou des fluides de compression 6 à l'intérieur desdites gorges 235a, 235b. Les gorges peuvent présenter une largeur et une profondeur de quelques millimètres.

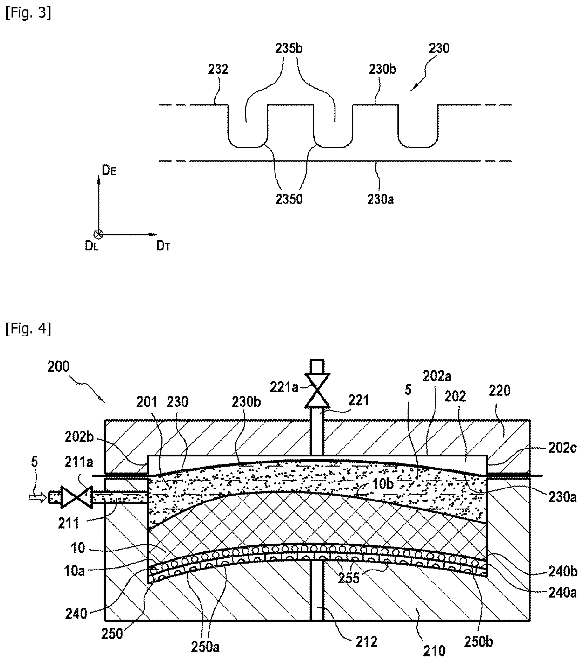

Les gorges 235a, 235b peuvent être des rainures de section rectangulaire avec des arêtes saillantes, ou des rainures de section rectangulaire avec des arêtes arrondies 2350, dites à section en forme de « U », comme illustré sur la figure 3. Les gorges 235a, 235b peuvent présenter une section en demi arc de cercle. Les sections appartiennent ici à un plan perpendiculaire à la membrane. Les gorges 235a, 235b sont de préférence creusées dans l'épaisseur de la membrane 230. La membrane 230 peut présenter une épaisseur plus réduite au niveau des gorges 235a, 235b que dans les portions de la membrane 230 s'étendant entre les gorges 235a, 235b.

La pluralité de gorges 235a, 235b peuvent former un réseau, ou former plusieurs réseaux distincts. Les gorges 235a, 235b peuvent être interconnectées. En particulier, les gorges 235a, 235b peuvent former un réseau recouvrant au moins une partie de la membrane 230. Les gorges 235a, 235b peuvent former un réseau recouvrant la majeure partie de l'aire de la membrane 230. Ainsi, la membrane 230 peut comprendre une partie drainante 232 qui présente une pluralité de gorges 235a, 235b, et une partie lisse 231 qui ne comprend pas de gorges. De préférence, la partie lisse 231 est présente autour de la partie drainante 232. De préférence, la membrane 230 est montée avec les première et deuxièmes parties 210 et 220 du moule par la partie lisse 231, la partie drainante 232 étant libre en l'absence de pression ou d'aspiration appliquée sur la membrane 230. De préférence, les gorges 235a, 235b peuvent s'étendre sur la totalité de la partie libre de la membrane 230, c'est-à-dire sur toute la partie de la membrane 230 qui n'est pas fixée aux parties rigides du moule 200.

Les gorges 235a, 235b peuvent former un quadrillage, c'est-à-dire qu'une première pluralité de gorges 235a s'étend suivant une première direction et qu'une deuxième pluralité de gorges 235b s'étend suivant une deuxième direction, différente de la première direction. On considère ici que les gorges 235a, 235b forment un quadrillage y compris si les première et deuxième directions ne sont pas perpendiculaires. Dans l'exemple illustré sur les figures 2 et 3, la première pluralité de gorges 235a s'étend suivant la direction longitudinale D_{L} et la deuxième pluralité de gorges 235b s'étend suivant la direction transversale D_{T}, les directions longitudinale et transversale D_{L} et D_{T} étant perpendiculaires. Ainsi, dans l'exemple illustré sur les figures 2 et 3, les gorges 235a, 235b forment un quadrillage droit, c'est-à-dire que la première pluralité de gorges 235a et la deuxième pluralité de gorges 235b s'étendent selon des directions perpendiculaires D_{L} et D_{T}.

Une membrane 230 présentant des gorges 235a, 235b formant un quadrillage permet une circulation très efficace du fluide de compression 6, en particulier lorsque la membrane 230 est plaquée contre une paroi rigide du moule, tout en étant très facile à fabriquer.

La disposition des gorges 235a, 235b sur la deuxième surface 230b de la membrane 230 est de préférence adaptée à la configuration de la chambre de compaction 202 et à la disposition du ou des orifices de sortie 221 du fluide de compaction 6. Ainsi, les gorges 235a, 235b peuvent être disposées de sorte que, lorsque la membrane 230 est en contact avec un ou plusieurs orifices de sortie 221 de la chambre de compaction 202 lors de l'étape d'aspiration, au moins une gorge 235a, 235b débouche sur au moins l'un des orifices de sortie 221 avec lequel la membrane 230 est en contact.

Les gorges peuvent être disposées de sorte que, lorsque la membrane 230 est en contact avec une ou plusieurs parois de la chambre de compaction 202 comprenant un ou plusieurs orifices de sortie de la chambre de compaction 202 lors de l'étape d'aspiration, la partie de la membrane 230 au contact de la ou les parois comprend un réseau de gorges 235a, 235b qui débouche d'une part sur au moins l'un des orifices de sortie avec lequel la membrane 230 est en contact et d'autre part sur un espace de la chambre de compaction 202. Le réseau de gorges comprend ainsi au moins un chemin reliant l'un des orifices de sortie à un espace de la chambre de compaction 202. Ainsi le fluide d'imprégnation présent dans ledit espace de la chambre de compaction 202 peut circuler jusqu'à au moins l'un des orifices de sortie grâce au réseau de gorges.

En outre, les gorges 235a, 235b peuvent être disposées de sorte que, lorsque la membrane 230 est en contact avec une ou plusieurs parois de la chambre de compaction 202 ne comprenant pas d'orifice de sortie lors de l'étape d'aspiration, de sorte à séparer la chambre de compaction 202 en au moins deux espaces séparés par la membrane, la partie de la membrane 230 au contact de la ou les parois comprend un réseau de gorges qui débouche d'une part sur l'un des espaces de la chambre de compaction 202 et d'autre part sur un autre des espaces de la chambre de compaction 202. Le réseau de gorges comprend ainsi au moins un chemin reliant les deux espaces de la chambre de compaction 202 séparés par la membrane 230. Ainsi le fluide d'imprégnation présent dans l'un des espaces de la chambre de compaction 202 ne comprenant pas d'orifice de sortie et fermé par la membrane 230 peut circuler jusqu'à au moins un espace de la chambre de compaction 202 comprenant au moins un orifice de sortie grâce au réseau de gorges.

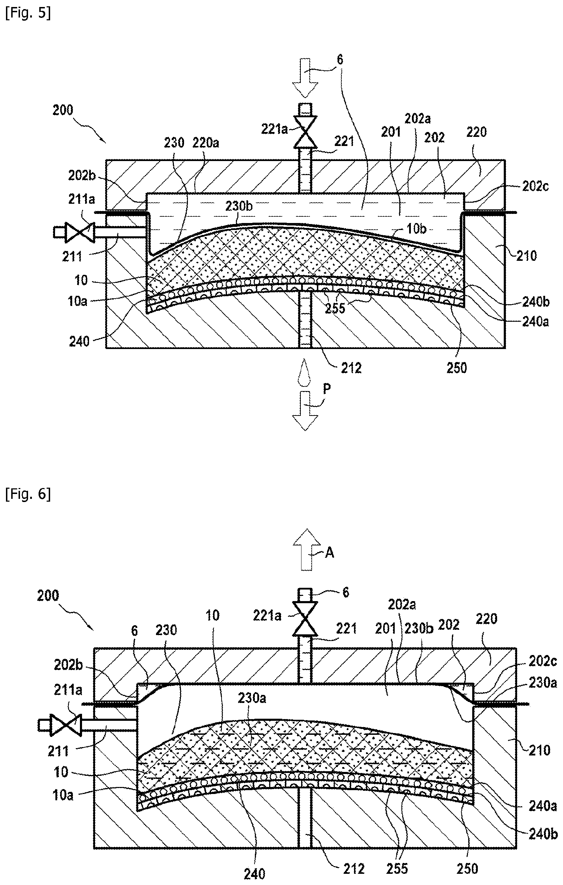

Plus généralement, les gorges sont disposées de sorte que, lorsque la membrane 230 est en contact avec une paroi de la chambre de compaction 202 lors de l'étape d'aspiration, au moins une partie des gorges débouche sur au moins un orifice de sortie ou sur un espace de la chambre de compaction comprenant au moins un orifice de sortie. La circulation du fluide d'imprégnation 5 jusqu'à un orifice de sortie 221 est donc facilitée lors de l'étape d'aspiration, en particulier lorsque la membrane 230 vient au contact d'un orifice de sortie, comme illustré sur la figure 6, ou lorsque la membrane 230 sépare la chambre de compaction 202 en au moins deux espaces, l'un des espaces ne comprenant pas d'orifice de sortie.

De préférence, le fond des gorges suit une trajectoire inclinée par rapport au plan comprenant les directions longitudinale D_{L} et transversale D_{T}, ladite trajectoire étant dirigée vers au moins un orifice de sortie, afin de faciliter davantage l'écoulement du fluide d'imprégnation.

Après avoir placé la préforme fibreuse 10 dans la chambre d'imprégnation 201, on dispose convenablement les première et deuxième parties 210 et 220 du moule 200 ainsi que la membrane 230, comme décrit précédemment et comme illustré sur la figure 1.

Comme illustré sur la figure 4, on injecte un fluide d'imprégnation 5 dans la chambre d'imprégnation 201 par le ou les orifices d'entrée 211 par le biais d'un dispositif d'injection du fluide d'imprégnation 5. Le fluide d'imprégnation 5 peut par exemple être une barbotine comprenant des particules de précurseur de matrice, ou une résine.

Si le fluide d'imprégnation 5 est une résine, il peut être par exemple une résine époxyde, une résine précurseur de carbone ou une résine précurseur de carbure de silicium.

Si le fluide d'imprégnation 5 est une barbotine, la barbotine peut correspondre à une suspension contenant une phase liquide et une poudre de particules de précurseur de matrice. La phase liquide peut être notamment constituée par de l'eau, de l'éthanol ou tout autre liquide dans lequel il est possible de mettre la poudre désirée en suspension. Le pH de la phase liquide de la barbotine peut être adapté selon la nature des particules, par exemple de l'eau avec un pH acide dans le cas d'une poudre d'alumine. Un liant organique peut être aussi ajouté (PVP ou PVA soluble dans l'eau par exemple). Ce liant permet d'assurer la tenue du cru éventuellement après séchage et avant frittage. La barbotine peut par exemple correspondre à une suspension aqueuse constituée de poudre d'alumine dont la dimension particulaire moyenne (D50) est comprise entre 0,1 µm et 1 µm et dont la fraction volumique est comprise entre 5% et 50%, la suspension étant acidifiée par de l'acide nitrique (pH compris entre 1,5 et 4). En outre de l'alumine, les particules d'oxyde réfractaire peuvent être également en un matériau choisi parmi l'alumine, la mullite, la silice, un aluminosilicate, un aluminophosphate, la zircone, un carbure, un borure, un nitrure et du carbone. En fonction de leur composition de base, les particules d'oxyde réfractaire peuvent être en outre mélangées avec des particules d'alumine, de zircone, d'aluminosilicate, d'oxydes de Terre rare, de dissilicates de Terre rare (utilisés par exemple dans les barrières environnementales ou thermiques) ou toute autre charge permettant de rajouter des fonctions spécifiques au matériau final (noir de carbone, graphite, carbure de silicium, etc.).

Une fois que le fluide d'imprégnation 5 est injecté dans la chambre d'imprégnation 201, on injecte le fluide de compression 6 dans la chambre de compaction 202 par le ou les orifices d'entrée 221 de ladite chambre de compaction 202, comme illustré sur la figure 5, par le biais d'un dispositif d'injection du fluide de compression 6. Le fluide de compression 6 peut être de l'eau. Toutefois, l'invention est particulièrement intéressante dans le cas où le fluide de compression 6 comprend au moins une huile, et/ou dans le cas où le fluide de compression 6 comprend une substance pouvant être néfaste pour la santé ou l'environnement.

Le fluide de compression 6 applique une pression sur le fluide d'imprégnation 5 au travers de la membrane 230 qui force ledit fluide d'imprégnation 5 à pénétrer dans la préforme fibreuse 10. Le fluide de compression 6 impose une pression sur l'intégralité de la membrane 230 et, par conséquent, sur l'intégralité du fluide d'imprégnation 5 présent au-dessus de la préforme 10.

Dans le cas où le fluide d'imprégnation 5 est une barbotine, la pression appliquée par la membrane 230 sur la barbotine et sur la préforme fibreuse est de préférence réduite, de manière à faire pénétrer la barbotine dans la préforme 10 et compacter suffisamment ladite préforme 10 pour permettre à la phase liquide de la barbotine d'être drainée par la strate de filtration 240 sans dégrader la préforme fibreuse 10. En combinaison avec l'application d'une pression sur la barbotine par le fluide de compression 6, un pompage P, par exemple au moyen d'une pompe à vide primaire (non représentée sur la figure 5), peut être réalisé au niveau du ou des orifices de sortie 212 de la chambre d'imprégnation 201. Ce pompage est optionnel. En outre, l'outillage 200 peut être muni de moyens de chauffage, comme des éléments résistifs intégrés aux parois des première et deuxième parties 210 et 220 du moule 200, afin d'augmenter la température dans la chambre de compaction 202 et de faciliter l'évacuation du liquide de la barbotine par évaporation. La strate de filtration 240 permet de retenir les particules de précurseur de matrice présentes dans la barbotine, lesdites particules se déposant ainsi progressivement dans la préforme fibreuse 10. Cela permet d'obtenir ultérieurement, par exemple après frittage, la matrice.

Lorsque la préforme fibreuse 10 est convenablement imprégnée, on peut procéder à une étape de chauffage ou de traitement thermique. Par exemple, dans le cas où le fluide d'imprégnation 5 est une résine, on peut procéder à une étape de polymérisation de la résine en chauffant la préforme fibreuse 10 imprégnée par la résine. De préférence, l'étape de polymérisation de la résine est réalisée alors que le fluide de compression 6 présent dans la chambre de compaction 202 continue de maintenir une pression sur la membrane 230, et par conséquent sur la préforme fibreuse 10.

On procède ensuite à une étape de vidange, dans laquelle le fluide de compression 6 présent dans la chambre de compaction 202 est aspiré par le ou les orifices de sortie 221 de la chambre de compaction 202, comme illustré sur la figure 6, par le biais d'un dispositif d'aspiration A.

Dans l'exemple illustré sur les figures 1 à 6, l'orifice d'entrée et de sortie 221 de la chambre de compaction 202 est situé sur la paroi supérieure 202a de ladite chambre 202 opposée à la membrane 230.

Dans le cas où les orifices de sortie et les orifices d'entrée de la chambre de compaction 202 ne sont pas confondus, on peut introduire de l'air comprimé par le ou les orifices d'entrée de la chambre de compaction 202. De préférence, si le ou les orifices d'entrée de la chambre de compaction 202 et le ou les orifices de sortie de la chambre de compaction 202 ne sont pas confondus, le ou les orifices d'entrée sont éloignés du ou des orifices de sortie. Par exemple, le ou les orifices d'entrée peuvent être disposés sur un premier bord de la paroi supérieure 202a de la chambre de compaction 202, et le ou les orifices de sortie peuvent être disposés sur un deuxième bord de ladite paroi supérieure 202a opposé au premier bord. Selon un autre exemple, le ou les orifices d'entrée peuvent être disposés sur la première paroi latérale 202b de la chambre de compaction 202 reliant la paroi supérieure 202a de la chambre de compaction 202 à la membrane 230, et le ou les orifices de sortie peuvent être disposés sur la deuxième paroi latérale 202c de la chambre de compaction 202 opposée à la première paroi latérale 202b.

Du fait de l'aspiration, la membrane 230 peut venir au contact d'une ou plusieurs parois rigides 202a du moule 200, et plus précisément au contact d'une ou plusieurs parois rigides 202a de la chambre de compaction 202. La présence de gorges 235a, 235b sur la deuxième surface 230b de la membrane 230 peut forcer la présence de fluide d'imprégnation 5 à des endroits localisés de la membrane 230. La présence de gorges 235a, 235b sur la deuxième surface 230b de la membrane 230 peut également permettre la circulation du fluide d'imprégnation 5 entre la membrane 230 et la ou les parois de la chambre d'imprégnation 202 contre laquelle ou lesquelles est appuyée la membrane 230. Cela permet à au moins une partie du fluide d'imprégnation 5 de rejoindre plus facilement le ou les orifices de sortie 221 de la chambre de compaction 202.

Enfin, on retire la préforme imprégnée ou densifiée de la chambre d'imprégnation 201, qui sera ensuite traitée de manière bien connue pour obtenir la pièce souhaitée. La pièce obtenue est par exemple une pièce en matériau composite à matrice céramique (CMC) ou à matrice organique (CMO). Le procédé selon l'invention peut permettre par exemple la fabrication d'un carter de moteur d'avion ou d'une pièce d'arrière-corps aéronautique.

L'expression « compris(e) entre ... et ... » doit se comprendre comme incluant les bornes.

## Revendications

1. Procédé de fabrication d'une pièce en matériau composite comprenant les étapes suivantes :
- la disposition d'une préforme fibreuse (10) dans un moule comprenant une chambre d'imprégnation (201) en faisant reposer une première face (10a) de la préforme (10) sur une surface de support (240b) de la chambre d'imprégnation (201), la chambre d'imprégnation (201) étant fermée par une membrane souple (230) placée en regard d'une deuxième face (10b) de la préforme (10), ladite membrane (230) séparant la chambre d'imprégnation (201) d'une chambre de compaction (202),
- l'injection d'un fluide d'imprégnation (5) dans la chambre d'imprégnation (201),
- l'injection d'un fluide de compression (6) dans la chambre de compaction (202) de manière à appliquer une pression sur la membrane (230),
- l'aspiration du fluide de compression (6) présent dans la chambre de compaction (202) par un ou plusieurs orifices de sortie (221) de la chambre de compaction (202),
le procédé étant **caractérisé en ce que** la surface (230b) de la membrane (230) présente du côté de la chambre de compaction (202) comprend une pluralité de gorges (235a, 235b).

2. Procédé selon la revendication 1, dans lequel les gorges (235a, 235b) sont disposées de sorte que, lorsque la membrane (230) est en contact avec une paroi (202a, 202b, 202c) de la chambre de compaction (202), au moins une partie des gorges (235a, 235b) débouche sur au moins un orifice de sortie (221) de la chambre de compaction (202) ou sur un espace de la chambre de compaction comprenant au moins un orifice de sortie.

3. Procédé selon la revendication 1 ou 2, dans lequel les gorges (235a, 235b) sont interconnectées.

4. Procédé selon l'une quelconque des revendications 1 à 3, dans lequel les gorges (235a, 235b) forment un réseau bidimensionnel de gorges.

5. Procédé selon la revendication 4, dans lequel les gorges (235a, 235b) forment un quadrillage.

6. Procédé selon l'une quelconque des revendications 1 à 5, dans lequel la membrane (230) est renforcée par des fibres de verre ou de polyester.

7. Procédé selon l'une quelconque des revendications 1 à 6, dans lequel le fluide de compression (6) comprend au moins une huile.

8. Procédé selon l'une quelconque des revendications 1 à 7, dans lequel le fluide d'imprégnation (5) est une résine, le procédé comprenant en outre une étape de polymérisation de la résine imprégnant la préforme fibreuse (10) après les étapes d'injection des fluides d'imprégnation (5) et de compression (6) et avant l'étape d'aspiration du fluide de compression (6).

9. Procédé selon l'une quelconque des revendications 1 à 8, dans lequel la préforme fibreuse (10) est réalisée par tissage tridimensionnel de fibres.

10. Système de fabrication (200) d'une pièce en matériau composite comprenant :
- un moule qui comprend une chambre d'imprégnation (201) comportant une surface de support (240b) destinée à être en contact d'une première face (10a) d'une préforme (10), la chambre d'imprégnation (201) étant fermée par une membrane souple (230) située en regard de la surface de support (240b), ladite membrane (230) séparant la chambre d'imprégnation (201) d'une chambre de compaction (202),
- un dispositif d'injection d'un fluide d'imprégnation (5) dans la chambre d'imprégnation (201),
- un dispositif d'injection d'un fluide de compression (6) dans la chambre de compaction (202) de manière à appliquer une pression sur la membrane (230),
- un dispositif d'aspiration du fluide de compression (6) présent dans la chambre de compaction (202) par un ou plusieurs orifices de sortie (221),
le système (200) étant **caractérisé en ce que** la face de la membrane (230) présente du côté de la chambre de compaction (202) comprend une pluralité de gorges (235a, 235b).

## Patentansprüche

1. Verfahren zur Herstellung eines Werkstücks aus Verbundwerkstoff, das die folgenden Schritte umfasst:
- Anordnen einer faserigen Vorform (10) in einer Form, die eine Imprägnierungskammer (201) umfasst, wobei eine erste Fläche (10a) der Vorform (10) auf einer Stützoberfläche (240b) der Imprägnierungskammer (201) ruhen gelassen wird, wobei die Imprägnierungskammer (201) durch eine nachgiebige Membran (230) verschlossen ist, die einer zweiten Fläche (10b) der Vorform (10) gegenüberliegend platziert ist, wobei die Membran (230) die Imprägnierungskammer (201) von einer Verdichtungskammer (202) trennt,
- Einpressen eines Imprägnierungsfluids (5) in die Imprägnierungskammer (201),
- Einpressen eines Verdichtungsfluids (6) in die Verdichtungskammer (202), derart dass ein Druck auf die Membran (230) angewendet wird,
- Ansaugen des Verdichtungsfluids (6), das in der Verdichtungskammer (202) vorhanden ist, durch eine oder mehrere Austrittsöffnungen (221) der Verdichtungskammer (202),
wobei das Verfahren **dadurch gekennzeichnet ist, dass** die Oberfläche (230b) der Membran (230), die auf der Seite der Verdichtungskammer (202) vorhanden ist, eine Vielzahl von Auskehlungen (235a, 235b) umfasst.

2. Verfahren nach Anspruch 1, wobei die Auskehlungen (235a, 235b) derart angeordnet sind, dass, wenn die Membran (230) mit einer Wand (202a, 202b, 202c) der Verdichtungskammer (202) in Kontakt ist, zumindest ein Teil der Auskehlungen (235a, 235b) in mindestens eine Austrittsöffnung (221) der Verdichtungskammer (202) oder in einen Raum der Verdichtungskammer mündet, der mindestens eine Austrittsöffnung umfasst.

3. Verfahren nach Anspruch 1 oder 2, wobei die Auskehlungen (235a, 235b) miteinander verbunden sind.

4. Verfahren nach einem der Ansprüche 1 bis 3, wobei die Auskehlungen (235a, 235b) ein zweidimensionales Netz von Auskehlungen bilden.

5. Verfahren nach Anspruch 4, wobei die Auskehlungen (235a, 235b) ein Gitternetz bilden.

6. Verfahren nach einem der Ansprüche 1 bis 5, wobei die Membran (230) mit Glas- oder Polyesterfasern verstärkt ist.

7. Verfahren nach einem der Ansprüche 1 bis 6, wobei das Verdichtungsfluid (6) mindestens ein Öl umfasst.

8. Verfahren nach einem der Ansprüche 1 bis 7, wobei das Imprägnierungsfluid (5) ein Harz ist, wobei das Verfahren ferner einen Schritt des Polymerisierens des Harzes, das die faserige Vorform (10) imprägniert, nach den Schritten des Einpressens des Imprägnierungs- (5) und des Verdichtungsfluids (6) und vor dem Schritt des Ansaugens des Verdichtungsfluids (6) umfasst.

9. Verfahren nach einem der Ansprüche 1 bis 8, wobei die faserige Vorform (10) durch dreidimensionales Weben von Fasern gefertigt wird.

10. System zur Herstellung (200) eines Werkstücks aus Verbundmaterial, umfassend:
- eine Form, die eine Imprägnierungskammer (201) umfasst, die eine Stützoberfläche (240b) umfasst, die dazu bestimmt ist, mit einer ersten Fläche (10a) einer Vorform (10) in Kontakt zu sein, wobei die Imprägnierungskammer (201) von einer nachgiebigen Membran (230) verschlossen ist, die sich gegenüber der Stützoberfläche (240b) befindet, wobei die Membran (230) die Imprägnierungskammer (201) von einer Verdichtungskammer (202) trennt,
- eine Vorrichtung zum Einpressen eines Imprägnierungsfluids (5) in die Imprägnierungskammer (201),
- eine Vorrichtung zum Einpressen eines Verdichtungsfluids (6) in die Verdichtungskammer (202), derart dass ein Druck auf die Membran (230) angewandt wird,
- eine Vorrichtung zum Ansaugen des Verdichtungsfluids (6), das in der Verdichtungskammer (202) vorhanden ist, über eine oder mehrere Austrittsöffnungen (221),
wobei das System (200) **dadurch gekennzeichnet ist, dass** die Fläche der Membran (230), die auf der Seite der Verdichtungskammer (202) vorhanden ist, eine Vielzahl von Auskehlungen (235a, 235b) umfasst.

## Claims

1. A method for manufacturing a part made of composite material, said method comprising the following steps:
- arranging a fibrous preform (10) in a mould comprising an impregnation chamber (201) by resting a first face (10a) of the preform (10) on a support surface (240b) of the impregnation chamber (201), the impregnation chamber (201) being closed by a flexible membrane (230) placed facing a second face (10b) of the preform (10), said membrane (230) separating the impregnation chamber (201) from a compaction chamber (202),
- injecting an impregnation fluid (5) into the impregnation chamber (201),
- injecting a compression fluid (6) into the compaction chamber (202) so as to apply a pressure on the membrane (230),
- aspiration of the compression fluid (6) present in the compaction chamber (202) via one or more outlet orifices (221) of the compaction chamber (202),
the method being **characterised in that** the surface (230b) of the membrane (230) present on the side of the compaction chamber (202) comprises a plurality of grooves (235a, 235b).

2. The method according to claim 1, wherein the grooves (235a, 235b) are disposed such that, when the membrane (230) is in contact with a wall (202a, 202b, 202c) of the compaction chamber (202), at least one portion of the grooves (235a, 235b) opens into at least one outlet orifice (221) of the compaction chamber (202) or into a space of the compaction chamber comprising at least one outlet orifice.

3. The method according to claim 1 or 2, wherein the grooves (235a, 235b) are interconnected.

4. The method according to any one of claims 1 to 3, wherein the grooves (235a, 235b) form a two-dimensional network of grooves.

5. The method according to claim 4, wherein the grooves (235a, 235b) form a grid.

6. The method according to any one of claims 1 to 5, wherein the membrane (230) is reinforced by glass fibres or polyester fibres.

7. The method according to any one of claims 1 to 6, wherein the compression fluid (6) comprises at least one oil.

8. The method according to any one of claims 1 to 7, wherein the impregnation fluid (5) is a resin, the method further comprising a polymerisation step of the resin impregnating the fibrous preform (10) after the steps of injecting impregnation fluid (5) and compression fluid (6) and before the step of aspiration of the compression fluid (6).

9. The method according to any one of claims 1 to 8, wherein the fibrous preform (10) is produced by three-dimensional weaving of fibres.

10. A system (200) for manufacturing a composite material part, said system comprising:
- a mould which comprises an impregnation chamber (201) including a support surface (240b) intended to be in contact with a first face (10a) of a preform (10), the impregnation chamber (201) being closed by a flexible membrane (230) situated facing the support surface (240b), said membrane (230) separating the impregnation chamber (201) from a compaction chamber (202),
- a device for injecting an impregnation fluid (5) into the impregnation chamber (201),
- a device for injecting a compression fluid (6) into the compaction chamber (202) so as to apply a pressure on the membrane (230),
- a device for aspiration of the compression fluid (6) present in the compaction chamber (202) via one or more outlet orifices (221),
the system (200) being **characterised in that** the face of the membrane (230) present on the side of the compaction chamber (202) comprises a plurality of grooves (235a, 235b).
